# EUROPEAN PATENT APPLICATION

(11) **EP 1 533 950 A1**
(43) Date of publication of application: **25.05.2005**
(21) Application number: 03026738.9
(22) Date of filing: 21.11.2003
(51) Int. Cl.: H04L 12/56, H04B 7/26

(54) **Method for connecting a mobile terminal to a wireless communication system, wireless communication system and mobile terminal for a wireless communication system**

(71) Applicant: Sony International (Europe) GmbH, 10785 Berlin (DE)
(72) Inventor: Nogueira-Nine, Juan, Hedelfinger Strasse 61 70327 Stuttgart (DE)
(74) Representative: Körber, Martin, Dipl.-Phys.

(57) **Abstract**

The invention relates to a method for connecting a mobile terminal to a wireless communication system,
comprising the steps of
sending by a central controller (1) a master beacon (6) containing information on the time frame structure of the wireless communication system and receiving the master beacon (6) by a first mobile terminal (2).

Hereby, the method comprises the steps of generating a modified copy (7) of the received master beacon (6) by said first mobile terminal (2) and
relaying the modified copy (7) to a second mobile terminal (3) in order to synchronise the second mobile terminal (3) to the time frame structure.

The invention further relates to a wireless communication system on which the steps of the method are executed and to a mobile terminal having means for executing the steps of the method.

## Description

The invention relates to a method for connecting a mobile terminal to a wireless communication system according to claim 1, a wireless communication system according to claim 8 and a mobile terminal for a wireless communication system according to claim 15.

Most of the existing wireless communication systems are based on a central controller, that supervises the wireless communication system by dividing the transmission channel into an organised frame structure and communicating this frame structure to the mobile terminals within the wireless communication system. Hereby, a mobile terminal needs to know the frame structure for being part of the wireless communication system. Therefore, the frame structure is periodically broadcasted by the central controller using a data structure called beacon. That means, that only the mobile terminals receiving this beacon, that is those within the transmission range of the central controller, can join the wireless communication system.

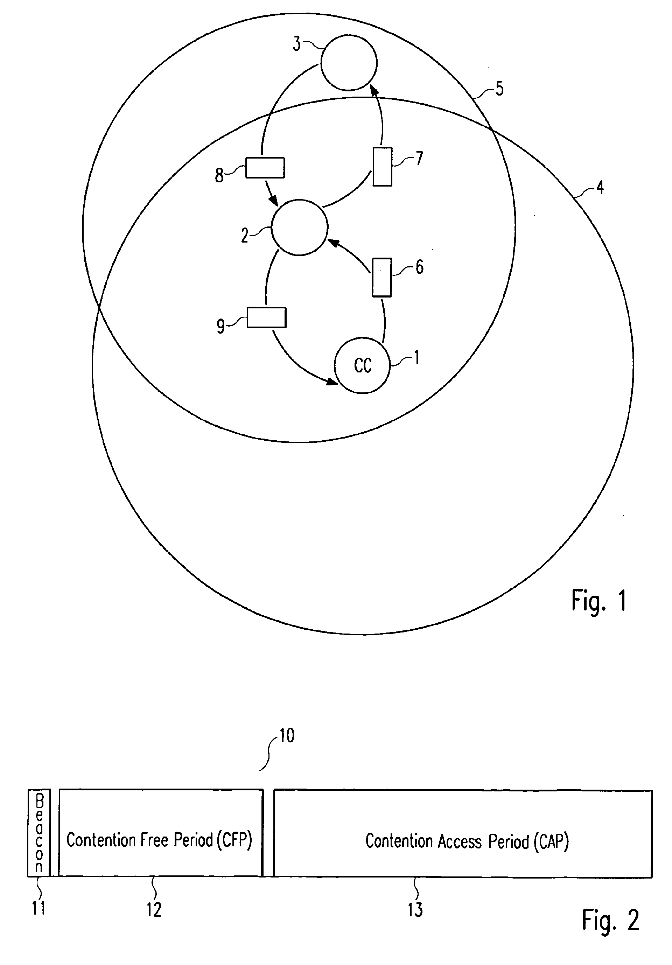

The beacon contains information on the time frame structure of the wireless communication system and serves for synchronising the mobile terminals. Already existing standards for a wireless communication systems are standards like ETSI Hiperlan/2 or IEEE802.15.3. Everyone of these standards has a time frame structure consisting of several parts, although not necessarily in this order, as shown in Fig. 2. Hereby, the frame 10 is divided into three parts namely the beacon 11, the contention free period CFP 12 and the contention access period CAP 13. As already explained, the beacon 11 is sent by the controller and contains information about the time frame structure of the wireless communication system and has to be broadcasted to the mobile terminals before they can start transmission or reception of data. The CFP is the period, where different time slots are assigned to the mobile terminals in order to allow the mobile terminals to communicate via the wireless communication systems. The assignment of the time slots is managed by the central controller. In the CAP the mobile terminals can request for transmission rights, that means they can send a request for the assignment of a time slot to the central controller.

Although the time frame structure of the wireless communication system is managed by the central controller, the communication between two mobile terminals can be done in a peer-to-peer connection during the CFP within the assigned time slot, as long as the following two conditions are fulfilled: First, the receiver mobile terminal has to be inside the transmission range of the transmitting mobile terminal and secondly the beacon has to be received by both mobile terminals in order to communicate the assigned time slot to both mobile terminals. The first condition is obvious, but the second one implies that the communication is possible only if both mobile terminals receive the beacon of the central controller, that means they are within the transmission range of the same central controller. That results in the problem that a first mobile terminal being in the range of the central controller cannot communicate to a second mobile terminal being in the transmission range of the first mobile terminal as long as the second mobile terminal does not receive the beacon from the central controller. In this case, the second mobile terminal does not even know that a nearby wireless communication system exists and can therefore not participate in the wireless communication system . To extend'the area covered by a wireless communication system, both the ETSI Hiperlan/2 and IEEE802.15.3 standards propose a solution for setting up a peer-to-peer communication between two mobile terminals being in two different wireless communication systems.

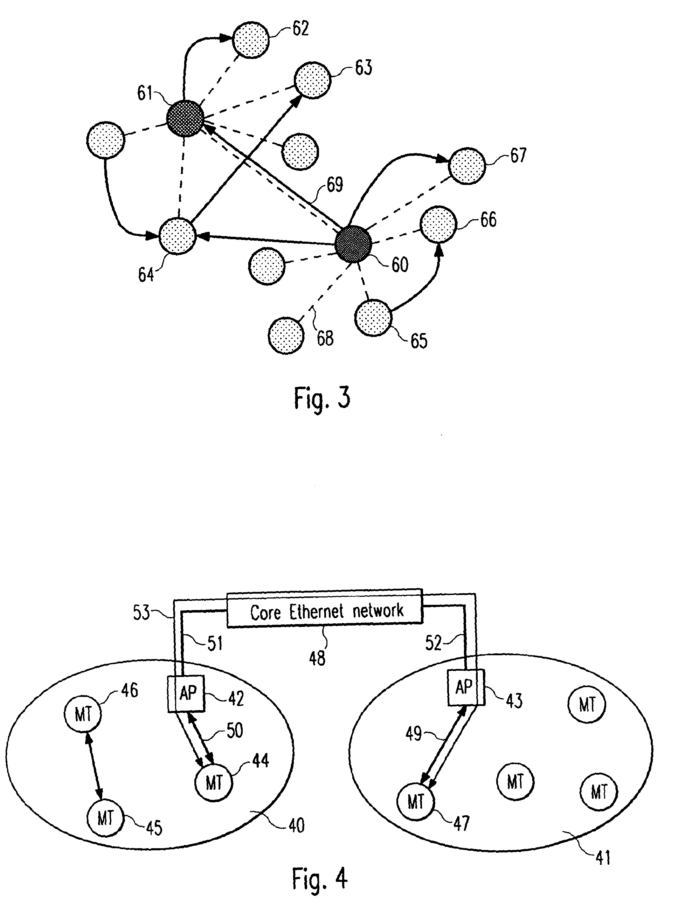

In ETSI Hiperlan/2 it is not possible to establish a direct wireless link between two mobile terminals which belong to two different wireless communication systems. The solution for this problem provided by ETSI Hiperlan/2 is shown in Fig. 4. Hereby, a first central controller 42 supervises a first wireless communication system 40 and a second central controller 43 supervises a second wireless communication system 41. Two mobile terminals within the same wireless communication system, e.g. the mobile terminals 45 and 46 in the first wireless communication system 40, can communicate with each other directly. If the mobile terminal 44 in the first wireless communication system 40 wants to communicate with the mobile terminal 47 in the second wireless communication system 41 it has to establish a wireless link 50 to the first central controller 42, the second mobile terminal 47 accordingly has to establish a wireless link 49 to the second central controller 43 and the first and the second central controller 42 and 43 are then connected by using a common core network, e.g. a wired Ethernet network 48 for establishing the communication link 53 between the first mobile terminal 44 in the first wireless communication system 40 and the second mobile terminal 47 in the second wireless communication system 41.

The disadvantage of this solution is the necessity to establish a common core network to link the first central controller 42 and the second central controller 43 with each other, which results in a high technical effort.

The IEEE802.15.3 proposes the solution by creating a child wireless communication system as shown in Fig. 3. Hereby, a parent central controller 61 supervises the communication of mobile terminals 62, 63 and 64 in the parent wireless communication system and a child central controller 60 supervises the communication of mobile terminals 65 to 68 in the child wireless communication system. Hereby, peer-to-peer data transmission is possible between mobile terminals of the same wireless communication system and between the parent central controller 61 and the child central controller 60. The communication between two parent central controllers is achieved by the child central controller 60 being part of two wireless communication systems at the same time, so that the child central controller 60 can forward data packets between two parent wireless communication systems.

The disadvantage is however not the fact that the data has to pass through an intermediate central controller to reach the destination but that both wireless communication systems are using the same frequency which means that the capacity of the wireless communication system is reduced by a factor of 2.

It is therefore the object of the present invention to connect a mobile terminal outside the range of a central controller to the wireless communication system supervised by the central controller without implementing further central controller stations or limiting the capacity of the wireless communication system.

This object is achieved by a method as defined in claim 1, a wireless communication system as defined in claim 8 and a mobile terminal as defined in claim 15. Further embodiments of the invention are set out in the independent claims.

According to the present invention, a method for connecting a mobile terminal to a wireless communication system is described comprising the steps of sending by a central controller a master beacon containing information on the time frame structure of a wireless communication system and receiving the master beacon by a first mobile terminal.
Hereby, the method comprises the steps of generating a modified copy of the received master beacon by said first mobile terminal and relaying the modified copy to a second mobile terminal in order to synchronise the second mobile terminal to the time frame structure.

Further, according to the present invention a wireless communication system is described, comprising a central controller for controlling the wireless communication of mobile terminals within the wireless communication system, a first mobile terminal within the transmission range of the central controller and a second mobile terminal, whereby the central controller is designed to send a master beacon containing information on the time frame structure of the wireless communication system.
Hereby, at least the first mobile terminal is designed to generate a modified copy of the received master beacon and to relay it to the second mobile terminal in order to synchronise the second mobile terminal to the time frame structure.

Further, according to the present invention a mobile terminal for a wireless communication system is described having means for receiving a master beacon containing information on the time frame structure of the wireless communication system.
Hereby, the mobile terminal comprises means for generating a modified copy of the received master beacon and for relaying the modified copy to a second mobile terminal in order to synchronise the second mobile terminal to the time frame structure.

By providing the possibility that the first mobile terminal being in the transmission range of the central controller and therefore receiving the master beacon is able to generate a modified copy of the master beacon and to relay this copy to a second mobile terminal, the second mobile terminal gets a notification of the existence of a wireless communication system and by knowing the time frame structure the second mobile terminal can participate in the wireless communication system, even if the second mobile terminal is not within the direct transmission range of the central controller.

Preferably the method comprises the step of requesting by the second mobile terminal a time slot within the time frame structure.

Further advantageously, the method comprises the step of sending said request to the first mobile terminal.

The method can comprise the step of relaying the request of the second mobile terminal to the central controller by the first mobile terminal.

Preferably, the method comprises providing by the central controller a time slot in the time frame structure for the second mobile terminal.

Further preferably, the method comprises the step of sending by the central controller a master beacon to the first mobile terminal containing information on the time slot provided for the second mobile terminal within the time frame structure.

The method can comprise modifying by the first mobile terminal the received master beacon in order to reflect changes in time reference of the time frame structure.

Further, the second mobile terminal can be outside the transmission range of the central controller.

Advantageously, the second mobile terminal is within the range of the first mobile terminal.

Preferably, the second mobile terminal is designed to send a request for a time slot within the time frame structure to the first mobile terminal.

The first mobile terminal can be designed to relay the request of the second mobile terminal to the central controller.

Advantageously, the central controller sends a master beacon to the first mobile terminal containing information on the time slot provided for the second mobile terminal within the time frame structure.

Further advantageously, the first mobile terminal is designed to modify the received master beacon in order to reflect changes in time reference of the time frame structure.

Preferably, the mobile terminal comprises means for receiving a request for a time slot within the time frame structure from the second mobile terminal.

Further preferably, the mobile terminal comprises means for relaying said request of the second mobile terminal to the central controller.

The mobile terminal can comprise means for receiving a master beacon from the central controller containing information on the time slot for the second mobile terminal within the time frame structure.

Advantageously, the mobile terminal comprises means for modifying the received master beacon in order to reflect changes in time reference of the time frame structure.

Embodiments of the invention will now be described, by way of example only, with reference to the accompanying drawings, in which:
Fig. 1 is a block diagram showing schematically the elements of the wireless communication system,
Fig. 2 is a block diagram showing schematically the elements of the time frame,
Fig. 3 is a block diagram showing schematically the elements of a wireless communication system according to the state of art,
Fig. 4 is a block diagram showing schematically the elements of a further wireless communication system according to the state of art,
Fig. 5 is a block diagram showing the detailed parts of the time frame structure,
Fig. 6 is a block diagram showing changes in time reference of the time frame structure according to the present invention,
Fig. 7 is a block diagram showing the time frame structure according to the present invention,
Fig. 8 is a block diagram showing a detailed embodiment of the wireless communication system according to the present invention, and
Fig. 9 is a flow chart showing the steps of the method according to the present invention.

Fig. 1 shows a wireless communication system according to the present invention. A central controller 1 supervises the communication within the wireless communication system by defining and broadcasting the time frame structure. Hereby, the central controller 1, which may be a base station or the like, has a transmission range 4. That means that mobile terminals outside the transmission range 4 of the central controller 1 or mobile terminals being shielded from the central controller 1 cannot reach data transmitted or sent out by the central controller 1. Hereby, such mobile terminals can be a mobile phone, a PDA, a mobile computer or any other mobile device able to participate within a wireless communication system.

A first mobile terminal 2 able to communicate within a wireless communication system is within the transmission range 4 of the central controller 1. The central controller 1 periodically sends out a master beacon 6 in order to broadcast the time frame structure of the wireless communication system to the mobile terminals, in the present case also to the first mobile terminal 2, within the transmission range 4 of the central controller 1. This master beacon 6 contains e.g. information on the beginning of the contention access period, the beginning of the contention free period and information on other mobile terminals, their addresses and their assigned time slots within the wireless communication system. The first mobile terminal 2 is able to generate a copy 7 of the master beacon 6, to modify the copy 7 and to send the modified copy 7 to a second mobile terminal 3. The sending of the modified copy 7 is only possible if the second mobile terminal 3 is within the range 5 of the first mobile terminal 2. As the second mobile terminal 3 is outside the transmission range 4 of the central controller 1, it cannot receive the master beacon 6. Therefore, the second mobile terminal 3 only after reception of the modified copy 7 of the master beacon 6 gets notice of the time frame structure of the wireless communication system, of the mobile terminals communicating within this wireless communication system and their addresses.

If the second mobile terminal 3 wants to communicate within the wireless communication system it has to send a request for a time slot within the time frame structure to the central controller 1. As the second mobile terminal 3 is not within the transmission range 4 of the central controller 1 it cannot send the request for a time slot directly, but has to send the request 8 to the first mobile terminal 2, which then in turn sends the relayed request 9 to the central controller 1. The central controller 1 can then provide a time slot in the time frame structure for the second mobile terminal 3 and broadcast this assigned time slot in the next sent out master beacon 6, which is then again received by the first mobile terminal 2, modified and sent as a modified copy 7 to the second mobile terminal 3, which in this way gets notice of the assigned time slot and can participate in the communication within the wireless communication system controlled by the central controller 1.

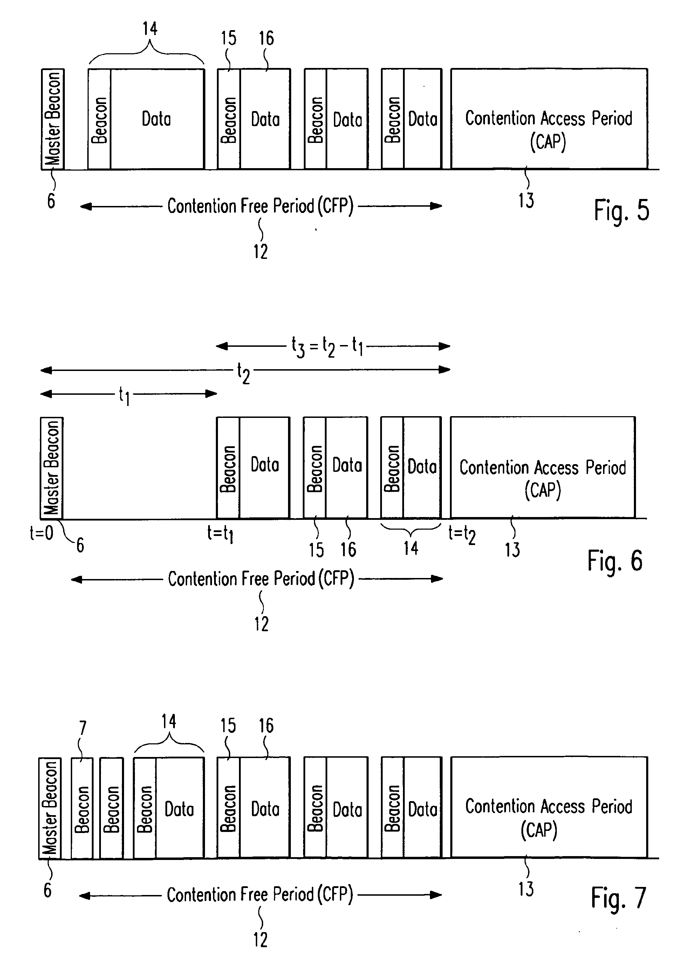

Fig. 5 shows a time frame structure used within a wireless communication system according to the present invention. At the beginning the central controller 1 sends out the master beacon 6 in order to broadcast the time frame structure. In the contention free period 12 several time slots assigned to the different mobile terminals within the wireless communication system are provided for sending data packets 14. Such a data packet 14 sent from one mobile terminal to a second mobile terminal contains a beacon copy 15 and a data block 16. The beacon copy 15 is a modified copy of the master beacon 6 and the data 16 contains all information or data one mobile terminal wants to communicate to another mobile terminal. After the contention free period 12 follows the contention access period 13 as already explained.

Hereby, the beacon copy 15 is sent out only together with the data block 16 during the assigned time slot. The sending of the beacon copy 15 will be repeated in every time frame as long as the communication between the mobile terminals, to which the time slot was assigned, keeps on. That means, that the data packet 14 containing the bacon copy 15 is sent primarily between two mobile terminals, but other mobile terminals can nevertheless receive this data packet 14 and in this way get notice of all the information broadcasted within the master beacon 6. As already mentioned, the master beacon 6 is not only copied but also modified by the first mobile terminal 2 before sending it together with the data packet 14. Hereby, the modification is as follows.

According to Fig. 6 the broadcasting of the master beacon 6 starts at a time t=0. In the master beacon it is communicated that the first time slot will start at a time t=t, and that the contention access period will start at a time t=t₂. As the receiving, copying and relaying of the master beacon 6 by the first mobile terminal 2 causes a time delay, the first mobile terminal 2 when sending the beacon copy 15 together with the data block 16 during the assigned time slot at t=t, has to change the time references t, and t₂ accordingly. In the master beacon 6 it is provided, that the time counting of the time frame starts with the reception of the master beacon, that is at the time t=0.

If the master beacon is received by the second mobile terminal 3 not directly from the central controller 1 but intermediately via the first mobile terminal 2 during the first time slot starting at t=t₁, then the second mobile terminal 3 has to know the time delay between the reception of the master beacon 6 by the first mobile terminal 2 and the reception of the beacon copy 15 by the second mobile terminal 3 in order know the time references broadcasted with the master beacon 6, that is the time reference t₂ for the beginning of the contention access period. Therefore, the first mobile terminal 2 changes the time information contained in the master beacon 6 by calculating a time t₃=t₂-t₁, which notifies the starting of the contention access period counted from the time t, which is the reception of the copy of the master beacon 6 by the second mobile terminal 3.

In the contention free period, the mobile terminals are able to communication with each other by sending data packets 16. Attached to these data packets is a copy 15 of the master beacon 6. If the second mobile terminal 3 outside the transmission range 4 of the central controller 1 but within the range 5 of the first mobile terminal 2 receives such a beacon copy 15, then it gets notice of a nearby existing wireless communication system, of the time frame structure and of the other mobile terminals communicating within the wireless communication system. Therefore, if the second mobile terminal 3 wants to participate in the communication within the wireless communication system it has to use the first mobile terminal 2 as a relay station to communicate with the central controller 1.

As already explained, the transmission of the beacon copy 15 together with the data block 16 may stop after a certain time. In order to assure, that nevertheless the second mobile terminal 3 constantly receives a copy of the master beacon 6 for having the possibility to communicate within the wireless communication system, a modified copy 7 of the master beacon 6 has to be periodically sent to the second mobile terminal 3. Therefore, as shown in Fig. 7, in the time frame structure after the broadcasting of the master beacon 6 and before the starting of the first time slot, the modified beacon 7 for the second mobile terminal 3 outside the transmission range of the central controller 1 can be sent by the first mobile terminal 2.

That means, that the beacon copy 15 within the data packet 14 serves as a possibility for the second mobile terminal 3 outside the transmission range 4 of the central controller 1 to get notice of the wireless communication system and that only with the receiving of the modified copy 7 of the master beacon 6 the second mobile terminal 3 can participate in the wireless communication system .

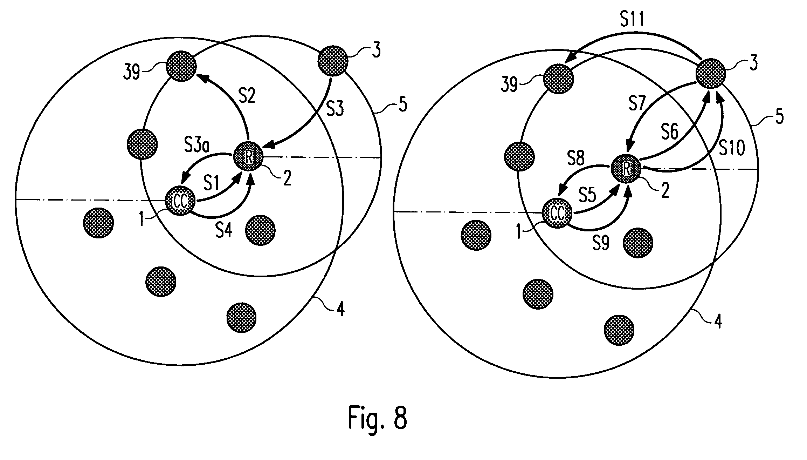

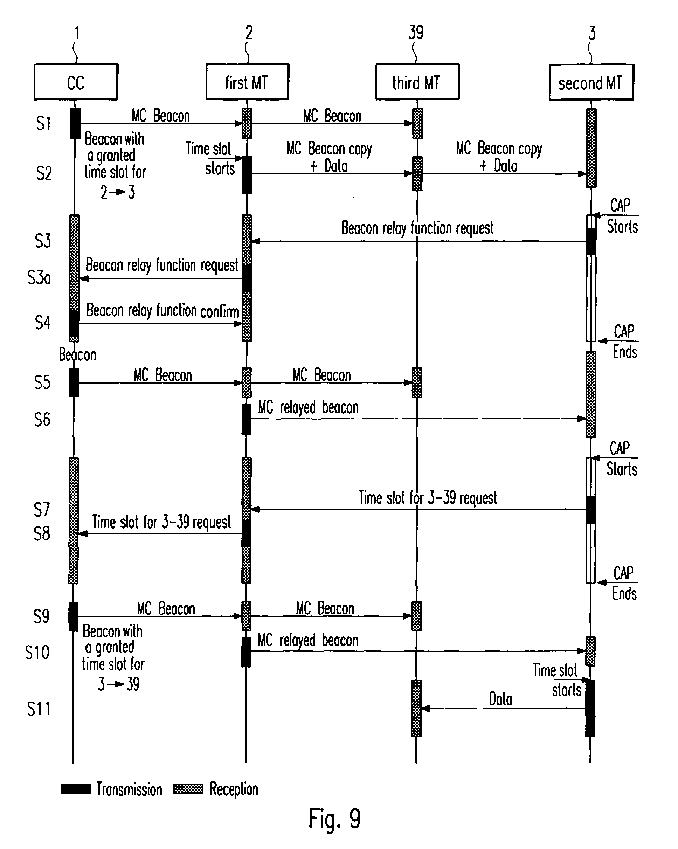

With references to Fig. 8 and Fig. 9 the steps of the process in detail will be explained. In a first step S 1 the central controller 1 broadcasts the master beacon 6 to all the mobile terminals within the transmission range 4 of the central controller 1. This master beacon can be received by the first mobile terminal 2 as well as by a third mobile terminal 39 within the transmission range 4 of the central controller 1. This master beacon 6 may contain a granted time slot for a communication between the first mobile terminal 2 and the third mobile terminal 39. In a second step S2 the communication between the first mobile terminal 2 and the third mobile terminal 39 during the granted time slot is accomplished by sending a data packet 16 together with a beacon copy 15 of the master beacon 6 from first mobile terminal 2 to the third mobile terminal 39. The second mobile terminal 3 not within the transmission range 4 of the central controller but within the range 5 of the first mobile terminal 2 can receive the data block 16 together with the beacon copy 15 sent by the first mobile terminal 2 to the third mobile terminal 39.

As the beacon copy 15 has a changed time information in order to reflect the time delay between the reception of the master beacon 6 and the reception of beacon copy 15, the second mobile terminal 3 knows when the contention access period starts. Therefore, after the starting of the contention access period in step S3 the second mobile terminal 3 can send a request for periodically receiving a copy 7 of the master beacon 6 to the first mobile terminal 2. In the next step S3a the first mobile terminal 2 sends this beacon request to the central controller 1. In step S4 the central controller then confirms the request and in step S5 the central controller 1 sends out a master beacon 6 and provides a time slot in step S6 in which the first mobile terminal 2 can send a modified copy of the master beacon to the second mobile terminal 3. This means that in the broadcasted master beacon 6 now information is contained also on the existence, the participation and the address of the second mobile terminal 3 within the wireless communication system, even if the second mobile terminal 3 is not within the transmission range 4 of the central controller 1.

From this time point on, the second mobile terminal 3 is able to communicate and to participate within the wireless communication system just like the other mobile terminals within the transmission range 4 of the central controller 1, as the second mobile terminal 3 can use the first mobile terminal 2 as a relay station for receiving or sending requests or beacons. This means, that also the basic procedures that need to be done by every mobile terminal to be part of a wireless communication system like association, encryption keys exchange or the like, can be executed by the second mobile terminal 3 using the first mobile terminal 2 as a relay station.

With the beacon copy 15 and the modified copy 7, the second mobile terminal 3 also gets notice of the existence and the address of the third mobile terminal 39. In step S7 after the starting of the contention access period, the second mobile terminal 3 can send a request for a time slot for communicating with the third mobile terminal 39 to the first mobile terminal 2. In step S8 the first mobile terminal 2 forwards this time slot request to the central controller 1. The central controller in step S9 can then broadcast a master beacon with a granted time slot for the communication between the second mobile terminal 3 and the third mobile terminal 39.

As the third mobile terminal 39 is also within the transmission range 4 of the central controller 1, it can receive the master beacon 6 broadcasted by the central controller 1 in step S9 and therefore knows that there is a time slot granted wherein the second mobile terminal 3 will send data to the third mobile terminal 39. In step S 10, the first mobile terminal 2 then relays a modified copy 7 of the master beacon 6 to the second mobile terminal 3. In the last step S11 after the starting of the contention free period the second mobile terminal 3 can then start sending data to the third mobile terminal 39 within the assigned time slot.

This means that the second mobile terminal 3 can be connected to a wireless communication system by using the first mobile terminal 2 as a relay station for sending or receiving beacons or requests to or from the central controller 1. At the same time with receiving a modified copy 7 of the master beacon 6, the second mobile terminal 3 gets notice of other mobile terminals communicating within the wireless communication system and is therefore able to participate in the wireless communication system just as the other mobile terminals, which results in a wider area which is covered by one wireless communication system and one central controller 1.

## Claims

1. Method for connecting a mobile terminal to a wireless communication system, comprising the steps of
sending by a central controller (1) a master beacon (6) containing information on the time frame structure of the wireless communication system and
receiving the master beacon (6) by a first mobile terminal (2),
**characterised by the steps of**
generating a modified copy (7) of the received master beacon (6) by said first mobile terminal (2) and
relaying the modified copy (7) to a second mobile terminal (3) in order to synchronise the second mobile terminal (3) to the time frame structure.

2. Method according to claim 1,
**characterised by**
requesting by the second mobile terminal (3) a time slot within the time frame structure.

3. Method according to claim 2,
**characterised by**
sending said request (8) to the first mobile terminal (1).

4. Method according to claim 3,
**characterised by**
relaying the request (8) of the second mobile terminal (3) to the central controller (1) by the first mobile terminal (2).

5. Method according to any of claims 2 to 4,
**characterised by**
providing by the central controller (1) a time slot in the time frame structure for the second mobile terminal (3).

6. Method according to claim 5,
**characterised by**
sending by the central controller (1) a master beacon (6) to the first mobile terminal (2) containing information on the time slot provided for the second mobile terminal (3) within the time frame structure.

7. Method according to claim 6,
**characterised by**
modifying by the first mobile terminal (3) the received master beacon (6) in order to reflect changes in time reference of the time frame structure.

8. Wireless communication system, comprising
a central controller (1) for controlling the wireless communication of mobile terminals (2; 3) within the wireless communication system,
a first mobile terminal (2) within the transmission range (4) of the central controller (1) and
a second mobile terminal (3),
whereby the central controller (1) is designed to send a master beacon (6) containing information on the time frame structure of the wireless communication system,
**characterised in**
**that** at least the first mobile terminal (2) is designed to generate a modified copy (7) of the received master beacon (6) and to relay it to the second mobile terminal (3) in order to synchronise the second mobile terminal (3) to the time frame structure.

9. System according to claim 8,
**characterised in**
**that** the second mobile terminal (3) is outside the transmission range (4) of the central controller (1).

10. System according to claim 8 or 9,
**characterised in**
**that** the second mobile terminal (3) is within the range (5) of the first mobile terminal (2).

11. System according to any of the claims 8 to 10,
**characterised in**
**that** the second mobile terminal (3) is designed to send a request (8) for a time slot within the time frame structure to the first mobile terminal (2).

12. System according to claim 11,
**characterised in**
**that** the first mobile terminal (2) is designed to relay the request (8) of the second mobile terminal (3) to the central controller (1).

13. System according to any of the claims 8 to 12,
**characterised in**
**that** the central controller (1) sends a master beacon (6) to the first mobile terminal (2) containing information on the time slot provided for the second mobile terminal (3) within the time frame structure.

14. System according to claim 13,
**characterised in**
**that** the first mobile terminal (2) is designed to modify the received master beacon (6) in order to reflect changes in time reference of the time frame structure.

15. Mobile terminal (2) for a wireless communication system having means for
receiving a master beacon (6) containing information on the time frame structure of the wireless communication system,
**characterised by**
means for generating a modified copy (7) of the received master beacon (6) and for relaying the modified copy (7) to a second mobile terminal (3) in order to synchronise the second mobile terminal (3) to the time frame structure.

16. Mobile terminal according to claim 15,
**characterised by**
means for receiving a request (8) for a time slot within the time frame structure from the second mobile terminal (3).

17. Mobile terminal according to clam 16,
**characterised by**
means for relaying said request (8) of the second mobile terminal (3) to the central controller (1).

18. Mobile terminal according to any of the claims 15 to 17,
**characterised by**
means for receiving a master beacon (6) from the central controller containing information on the time slot for the second mobile terminal (3) within the time frame structure.

19. Mobile terminal according to any of the claims 15 to 18,
**characterised by**
means for modifying the received master beacon (6) in order to reflect changes in time reference of the time frame structure.
